# EUROPÄISCHE PATENTSCHRIFT

(11) **EP 3 348 539 B1**
(45) Veröffentlichungstag und Bekanntmachung des Hinweises auf die Patenterteilung: **20.04.2022**
(21) Anmeldenummer: 17000046.7
(22) Anmeldetag: 11.01.2017
(51) Int. Cl.: C05D 3/02, C05F 11/02, C05F 17/00

(54) **VERFAHREN ZUR HERSTELLUNG EINES ORGANISCHEN CARBONDÜNGERS**
METHOD OF MAKING AN ORGANIC CARBON FERTILISER
PROCEDE DE FABRICATION D'UN ENGRAIS CARBONÉ ORGANIQUE

(43) Veröffentlichungstag der Anmeldung: 18.07.2018
(73) Patentinhaber: Bode, Ingo, 31840 Hessisch Oldendorf (DE); Kurrelvink, Hartwig, 26810 Westoverledingen (DE); Harmeier, Frank, 26810 Westoverledingen (DE)
(72) Erfinder: Bode, Ingo, 31840 Hessisch Oldendorf (DE); Kurrelvink, Hartwig, 26810 Westoverledingen (DE); Harmeier, Frank, 26810 Westoverledingen (DE)
(74) Vertreter: Gramm, Lins & Partner Patent- und Rechtsanwälte PartGmbB

(56) Entgegenhaltungen:
- EP-A1- 2 284 141
- EP-B1- 2 125 994
- WO-A1-2007/039311
- WO-A1-2011/060904
- WO-A1-2014/015184
- WO-A2-90/12771
- CN-B- 102 850 120
- DE-A1-102011 108 436
- DE-A1-102014 013 078
- FAGBOHUNGBE M O ET AL: "The challenges of anaerobic digestion and the role of biochar in optimizing anaerobic digestion", WASTE MANAGEMENT 20170301 ELSEVIER LTD GBR, Bd. 61, 5. Dezember 2016 (2016-12-05), Seiten 236-249, XP029945460, DOI: 10.1016/J.WASMAN.2016.11.028

## Beschreibung

Die vorliegende Erfindung befasst sich mit einem Verfahren zur Herstellung eines organischen Carbondüngers zur Verbesserung der Bodenstruktur und zur Förderung des Pflanzenwachstums, insbesondere mit einem Düngemittel, dessen Basisanteil aus Gärresten aus Biogasanlagen hergestellt wird.

Dabei handelt es sich um einen Dünger mit Nebenwirkungen, die durch den Zusatz von verschiedenen mineralischen oder organischen Stoffen erzielt werden. Die Mischungsgrundlage bilden die getrockneten Gärprodukte aus Biogasanlagen, die sowohl nachwachsende Rohstoffe wie auch organische Reststoffe verarbeiten, die im Rahmen der Bioabfallverordnung zu betrachten sind.

Im Stand der Technik ist aus der WO 2014/015184 A1 ein Biorafinerie-System bekannt geworden, in dem eine Reihe von Kompositionen an Düngemitteln zum Fördern des Pflanzenwachstums offenbart werden, die u.a. sowohl Algengärreste als auch organischen Kohlenstoff beinhalten. Dieses Düngemittel ist ein Nebenprodukt aus dem Biorafinerie-System, das primär dazu dient, natürliche Energiequellen zu nutzen, um stoffliche Transformationen in einem vollständigen Energiekreislauf anzuregen.

Ferner offenbart die CN 102 850 120 B und der Artikel von FAGBOHUNGBE M O et. al.in Wast Management 20170301 ELSEVIER LTD GBR, Bd. 61, 5. December 2016 , 236 - 249 einen Dünger, der eine Mischung aus anaerobe behandelten festen Gärprodukten aus einer Biogasanlage umfassen, wobei bei die aufgeführten Druckschriften keine Mengenangaben der einzelnen Komponenten der Mischungen offenbaren.

Die WO 2007/039311 A1, DE 10 2011 108 436 A1 und DE 10 2014 013 078 A1 offenbaren anaerobe behandelte feste Gärprodukte mit einermTrockensubstanzanteil von mindestens 85%, wodurch insbesondere die Lagerfähigkeit erhöht werden soll.

Weiterhin ist der DE 42 37 964 A1 ein organischer bzw. organisch-mineralischer Dünger zu entnehmen, der in einem Kompost enthalten ist. Der Dünger ist vorzugsweise für landwirtschaftlich genutzte Flächen bestimmt und wird nach dem Vermischen der einzelnen Bestandteile zu Pellets oder Granulaten verarbeitet, die anschließend gekühlt und/oder getrocknet werden. Dabei liegt der Kompostanteil des Düngers zwischen 30 Gew.% und 70 Gew.% und der Anteil des mineralischen oder organischen Düngers um etwa 40 Gew.% bis 60 Gew.% geringer ist als der Düngerbedarf pro Hektar der zu düngenden Pflanzen. Als nachteilig an diesem Düngemittel wird es empfunden, dass der zu verwendende Grundstoff für die Gesamtmischung ausschließlich aus einem Kompost (Humus) hergestellt wird, der bekanntlich eine verhältnismäßig lange Zeit benötigt, um eine brauchbare Konsistenz des Komposts zu erhalten und lediglich einen sehr geringen Anteil an Pflanzennährstoffen beinhaltet. Daher ist diese Art von Dünger nicht unmittelbar für den Gebrauch im Gartenbau und in Gärten und Blumentöpfen geeignet. Da bekanntlich die verschiedenen Pflanzenarten saisonal und artbedingt unterschiedliche Nährstoffe und Zusatzstoffe benötigen, um ein optimales Pflanzenwachstum zu entfalten. So ist es sinnvoll, zu den unterschiedlichen Jahreszeiten auch unterschiedliche Dünger zur Förderung des Pflanzenwachstums zu verwenden.

Ferner ist aus der DE10 2011 108 436 A1 ein saisonaler Bodenhilfsstoff zur Förderung des Pflanzenwachstums mit einem Basisanteil aus einer anaerob ausgefaulten Biomasse bekannt, der je nach Jahreszeit eine vorbestimmte Menge an Calcium und/oder Ton, sowie Hornmehl und/oder Knochenmehl beigemischt ist. In besonderen Fällen sind dem Bodenhilfsstoff zusätzlich auch bestimmte Duftstoff zur Abschreckung von Kleintieren beigemischt. Nach dem Mischvorgang des saisonalen Bodenhilfsstoffes wird die gesamte Masse strangförmig verpresst und in einzelne Pellets zerteilt, die in stapelbaren Verpackungen platzsparend gelagert werden.

Demgegenüber befasst sich die vorliegende Erfindung mit der Herstellung eines organischen Langzeitdüngers, und organischen Bodenverbesserern mit verzögerter Freisetzung der Nährstoffe. Insbesondere soll das nachstehend beschriebene Material die Grundlage für das Vermischen mit anderen Stoffen darstellen.

Diese Gärprodukte aus der anaeroben Fermentation bei der Gewinnung von regenerativer Energie aus nachwachsenden Rohstoffen, Reststoffe aus der Lebensmittelproduktion und Wirtschaftsdünger aus der Landwirtschaft (beides Kofermentate) bilden die Grundlage der Mischungen der vorliegenden Erfindung. Sie können sowohl in der ursprünglichen Form eingesetzt werden, können aber auch vor der Aufbereitung einer Fest-Flüssigtrennung unterzogen worden sein. Bevorzugt wird dieses Material in der Landwirtschaft für die Düngung der landwirtschaftlich genutzten Flächen eingesetzt, was nicht ganz unbedenklich ist und einige Betrachtungen erfordert.

Für die Düngung landwirtschaftlicher Flächen und auch im Gartenbau und Berufsgartenbau werden für die Düngung mineralische Dünger eingesetzt. Eine unabdingbare Folge des Einsatzes mineralischen Düngers und unbehandelten Wirtschaftsdüngers aus der landwirtschaftlichen Tierhaltung ist eine zunehmende Eutrophierung, wobei die Trophiesysteme das Grundwasser und Oberflächengewässer bilden. Da beide Gewässerarten unmittelbar mit der Gewinnung von Trinkwasser in Verbindung stehen und die steigenden Nitratgehalte infolge des Einbringens von Stickstoffverbindungen sich zunehmend im Trinkwasser wiederfinden, ist der Einsatz dieser Stoffe auch durch zahlreiche gesetzliche Vorgaben stark reglementiert worden.

Weitere Folgen einer intensiven Düngung mit mineralischen Düngern sind Risiken durch die z.T. stark gesundheitsschädlichen Beimischungen in mineralischen Düngemitteln. Gerade Phosphatverbindungen bilden ein Gefährdungspotential durch die Überdüngung mit diesen Verbindungen. Ein vermehrtes Algenwachstum in den Trophiesystemen und damit verbunden eine starke Abnahme des Sauerstoffgehaltes in den Gewässern stellen eine erhebliche Gefährdung infolge der Überdüngung dar. Insbesondere in Regionen, in denen bedingt durch die intensive Tierhaltung ein Nährstoffüberschuss vorliegt, müssen Maßnahmen ergriffen werden, die hier anfallenden Nährstoffe in andere Nutzungsbereiche und Regionen mit einem Nährstoffmangel zu verbringen.

Mit Blick auf die Erzeugung regenerativer Energien ist auffällig, dass die Anlagen zur anaeroben Vergärung (Biogasanlagen) überwiegend in einer nicht wirtschaftlichen und darüber hinaus ökologisch nachlässigen Weise betrieben werden. Zwar wird die elektrische Energie in das öffentliche Stromnetz eingespeist und diese Einspeisung stellt die Einnahmen für die Biogasanlage dar, jedoch ist nur selten ein Nutzungskonzept für die entstehende Wärmeenergie vorhanden. Gerade diese Wärmeenergie stellt einen sehr großen Anteil (> 50%) der entstehenden Energie dar.

Im Rahmen der Erzeugung regenerativer Energiegewinnung stellt dieses einen großen Nachteil dar. Die oben aufgeführten Mängel können durch die erfindungsgemäße Verwendung der Gärprodukte zumindest teilweise kompensiert werden.

Ein Mittel der Wahl besteht darin, die prozessbedingt entstehende Wärmeenergie dafür einzusetzen, die Gärreste einzuengen bzw. zu trocknen. Hierdurch entsteht ein Produkt welches an Transportwürdigkeit gewonnen hat. Mit einem lagerstabilen Gehalt an Trockenmasse kann dieser Stoff nunmehr über längere Strecken transportiert oder anderen Einsatzzwecken zugeführt werden.

Neben dem Transport dieser Gärprodukte können diese Stoffe auch für andere Zwecke und Einsatzbereiche verwendet werden, die außerhalb des landwirtschaftlichen Bereichs angesiedelt sind.

Die getrockneten Gärprodukte können dann sowohl in der Landwirtschaft, wie auch im Garten und Landschaftsbau eingesetzt werden.

Ziel dieser Neuerung ist es, die getrockneten Gärprodukte sinnvoll außerhalb der Landwirtschaft einzusetzen. Somit ist zum einen der ökologische Ansatz der Erzeugung regenerativer Energie, und zum anderen die sinnvolle Verwendung der Gärprodukte gesichert.

Durch die erfindungsgemäße Mischung dieser Gärprodukte mit anderen Zusatzstoffen können die daraus resultierenden Mischungen unterschiedlichen Verwendungszwecken wie z.B. dem Gartenbau zugeordnet werden.

Mit der vorliegenden Erfindung soll nicht das Gärprodukt allein, sondern die durch die Vermischung entstehenden Gemische vorgestellt werden. Vorzugsweise werden im Stand der Technik sowohl im Garten-und Landschaftsbau als auch im Do-it-yourself-Bereich mineralische Dünger in Pulverform und als Flüssigdünger eingesetzt. In der Landwirtschaft werden neben mineralischen Düngern auch Gemische aus Kot und Urin aus der Tiermast (Gülle) eingesetzt.

Aufgrund der leicht löslichen Nährstoffe (in der Hauptsache Stickstoff, Phosphat und Kali) sowohl in den mineralischen Düngern, wie auch in der Gülle, ist ein Düngen mit diesen Stoffen hinsichtlich der grundwasserbeeinflussenden Eigenschaften und der Schonung endlicher Ressourcen nicht ganz unkritisch zu sehen.

Moderne Biogasanlagen können heute nur dann wirtschaftlich betrieben werden, wenn die entstehende Prozesswärme sinnvoll genutzt wird. Die Trocknung der Gärreste stellt hierfür eine zweckdienliche Maßnahme dar. Unter Zuhilfenahme thermischer Energie werden diese Gärprodukte einer Trocknung mithilfe eines geeigneten Trockners unterzogen.

Noch im flüssigen Zustand, vor der Trocknung, wird den Gärresten eine Kohle zugesetzt. Diese Kohle kann sowohl konventionell, pyrolytisch aus Braun- oder Steinkohle gewonnen werden, oder auch durch die Carbonisierung von pflanzlichen Materialien hergestellt worden sein. Dieser Inkohlungsprozess ist jedoch nicht zwangsläufig auf die Pyrolyse beschränkt. Wahlweise soll für die Gewinnung der Kohle auch das Verfahren der hydrothermalen Carbonisierung (HTC) eingesetzt werden.

Diese eingesetzte Kohle stattet die Grundsubstanz der Düngevermischungen mit besonderen Eigenschaften aus. Bedingt durch die extrem große spezifische Oberfläche der Kohle, die sich aufteilt in Mikro-, Meso- und Makroporen und eine Fläche von 100 bis 2000 qm bietet, stellt diese Kohle eine Habitatsvergrößerung für Mikroorganismanen dar. Hieraus resultieren bodenverbessernde Eigenschaften der Kohle auf mikrobiologischer Ebene. Bedingt durch die sehr poröse Oberflächenbeschaffenheit der Kohle weist dieser Stoff eine sehr gute Fähigkeit auf, Kationen zu adsorbieren und wieder freizusetzen.

Da auch Feuchtigkeit von der Kohle in Form des 5 - fachen des Eigengewichtes spontan aufgenommen werden und langsam wieder abgegeben werden kann, forciert der Zusatz von Kohle neben der retardierend abgegebenen Kationen auch eine langsame Freisetzung von aufgenommener Feuchtigkeit.

Der Grundstoff dieser Düngermischungen verleiht dem daraus hergestellten Düngemittel Eigenschaften, die eine retardierende Freisetzung von Feuchtigkeit und einmal aufgenommenen Nährstoffen, bei einer Forcierung des Wachstums von bodenbürtigen Mikroorganismen.

Nach der Trocknung auf einen Trockenmassegehalt von > 85 %, steht das Material als Einsatzstoff für die Vermischung mit anderen Stoffen zur Verfügung. Aus diesem Material kann unter der Beimischung von verschiedenen Zuschlagstoffen ein Dünger für die verschiedenen differenzierte Einsatzbereiche geschaffen werden.

Die hieraus resultierenden Stoffgemische sollen unterschiedlichen Nutzungszwecken zugeführt werden. Durch diese Vermischungen entstehen Stoffgemische, die hochwertige und neuartige Düngemittel, Bodenhilfsstoffe und Pflanzenschutzmittel für die unterschiedlichsten Anwendungsbereiche darstellen.

Die mit der vorliegenden Erfindung zu verbessernden Problemfelder sind im Wesentlichen wie folgt:
1. Ressourcen schonen Die für die Pflanzenernährung wichtigsten Hauptnährstoffe sind Phosphate, Stickstoff, Kali, Magnesium und Calciumverbindungen. Mineralische Dünger beinhalten diese Nährstoffe in einem sehr hohen Maß. Die Phosphat- und Kaliverbindungen sind in geogenen Lagerstätten zu finden und liegen in begrenzter Menge vor. Bedingt durch die steigende Verwendung dieser Stoffe in der intensiv betriebenen Landwirtschaft, sowie der massiven Verwendung im Hobby- und Profigartenbereich, steigt der Verbrauch an mineralischem Dünger weltweit ständig an. Die Lagerstätten werden ausgebeutet. Drastische Preissteigerungen im Bereich der Düngemittel und schädliche Umwelteinflüsse sind eine Folge davon.
2. Umweltschutz Ferner hat die Auswertung großer Datenmengen ergeben, dass gerade im Hobbygartenbereich mit mineralischen Düngemitteln relativ sorglos umgegangen wird. In der Landwirtschaft werden die Erzeuger gezwungen, durch einen erhöhten Einsatz an Düngemitteln die Produktion an Lebensmitteln zu steigern. Dieses hat in den vergangenen Jahren zum Teil zu beträchtlichen Überdüngungen geführt. Folge dieser Überdüngung ist eine fortschreitende Eutrophierung sowie eine steigende Belastung des Grundwassers.

Mittlerweile hat das ein erheblicher Anteil der Gartenbesitzer erkannt und ist darauf bedacht, auch in diesem Bereich einen Beitrag zum Umweltschutz zu leisten.

Neben dem Düngewert der Gärprodukte, der aus den in der organischen Masse eingeschlossenen Nährstoffen resultiert, wird durch die organische Masse der Humusgehalt im Boden ergänzt. Besonders wichtig ist dieses, da der Humusgehalt im Boden ein wichtiges Maß für die Bodenfruchtbarkeit darstellt. Durch einige Kulturpflanzen wird dieser Humusgehalt gezehrt. Diesen Verlust regelmäßig auszugleichen ist, von besonderer Bedeutung.

Da die organische Masse nur langsam durch die Bodenmikro-Makroorganismen zersetzt wird, werden auch die eingeschlossenen Nährstoffe nur langsam freigesetzt und stehen somit den Pflanzen direkt zur Verfügung. Eine Eutrophierung wird somit ausgeschlossen.

Weiterhin ist bekannt, dass bedingt durch die natürlichen Kali- und Phosphatlagerstätten andere, schädliche Stoffe in den Boden eingebracht werden. So ist bekannt, dass alle Phosphatlagerstätten mit einem Gehalt an z.B. schädlichem Uran und Schwermetallen (hauptsächlich das hochgiftige Cadmium) belastet sind.

Bedingt durch Niederschläge werden Nährstoffe aus mineralischen Düngern leicht gelöst und gelangen somit in das Grundwasser. Eine zunehmende Eutrophierung ist die Folge. Intensive Messungen und Beobachtungen der vergangenen Jahre haben gezeigt, dass die aus der Stickstoffdüngung resultierende Nitrit- und Nitratgehalte im Trinkwasser drastisch angestiegen sind. Regional werden die von der WHO definierten Höchstmengen häufig deutlich überschritten.

In den Regionen mit einem hohen Viehbestand werden vermehrt tierische Exkremente auf die landwirtschaftlichen Flächen aufgebracht. Leicht werden hieraus die Nährstoffe ausgewaschen und gelangen in das Grundwasser. Neben den mineralischen Düngern ist dieses eine weitere und gewichtige Quelle eines zunehmenden Gehaltes an Stoffen, die das Trinkwasser gefährden.

Da gerade in den Überschussregionen die durch eine extrem große Viehdichte gekennzeichnet ist, auch die größte Häufigkeit der Biogasanlagen anzutreffen ist, kann durch eine derartige Aufbereitung (Trocknung, Vermischung) und Verarbeitung der Gärprodukte aus Biogasanlagen ein Teilstrom der Nährstoffe aus den Überschussregionen ausgeschleust werden. Somit kann durch die derartige Verwendung der Nährstoffe ein Beitrag zum Gesundheitsschutz, durch die Entlastung der Trophiesysteme, geleistet werden und könnte durch eine zweckmäßige Trocknung des Materials in eine transportfähige Form entgegengewirkt werden und kann auf diese Weise aus den Überschussregionen ausgeschleust werden.

### 3. Gesundheitsschutz

In erster Linie stellt der Einsatz von Eisen II sulfat als Moosvernichter im Rasen eine gesundheitliche Gefährdung des Anwenders dar.

Durch die Einmischung von gelöstem Eisen II sulfat, oder andere geeignete Eisensalze in die flüssigen Gärreste und die anschließende Trocknung wird die gesundheitsschädliche Substanz mit organischer Masse umschlossen und somit das Gefährdungspotential deutlich verringert.

Anknüpfend an das vorstehend Beschriebene, lässt sich auch sagen, dass durch den Einsatz der getrockneten Gärprodukte als Düngemittel die in den Viehregionen anfallenden Nährstoffe aus den gefährdeten Regionen ausgeschleust werden und dort die Belastungssituation entschärft wird und könnte ebenfalls zum Gesundheitsschutz der Menschen in den betroffenen Regionen beitragen.

Im Rahmen der Herstellung dieser Düngemittel, ist aus Immissionsschutzgründen eine Anlage installiert, die dazu führt, dass schädliches Ammoniak bei der anfallenden Gülle eliminiert wird.

Der in dieser Verbindung enthaltene Stickstoff wird ebenfalls aus der Gülle entfernt und verhindert zum Einen eine weitere Belastung mit Stickstoff und zum Anderen eine Belastung der Umgebungsluft.

Um dieses Ziel zu erreichen wird die bei der Trocknung der Gärprodukte entstehende Abluft über einen Luftwäscher geleitet. Hauptbestandteil dieses Luftwäschers stellt eine konzentrierte Schwefelsäure dar.

### Nach der Formel

H2SO4 + 2 NH3 = (NH4)2SO4

entsteht bei diesem Prozess eine Lösung aus Ammoniumsulfat in einer Konzentration von ca. 5 %. Diese Lösung stellt einen hochwirksamen und sehr schnell pflanzenverfügbaren Dünger dar, der in den Vegatationsperioden in der Landwirtschachaft Anwendung findet. Vorstehend beschriebenen Vorgänge stellen einen großen Beitrag zu einem aktiven Umweltschutz und einer Reduktion des Gefahrenpotentials welches aus der Düngung und der heute intensiv betriebenen Viehwirtschaft dar.

### 4. Garten- Landschaftspflege

Die dieser Erfindung zugrunde liegenden Ausgangsstoffe sind eine moderne Grundlage für Mischungen, die bisher im Gartenbau nicht bekannt gewesen sind. Ohne die Gefahr einer Überdüngung der Pflanzen wird mit jeder Düngung neue organische Masse zugeführt, die für jeden Gartenboden von besonderer Bedeutung ist. Mit den nachstehend aufgeführten differenzierten Stoffen werden die unterschiedlichsten Möglichkeiten gegeben, einen modernen Gartenbau ohne den Einsatz von chemischen Stoffen zu betreiben.

Der Zweck der Erfindung ist mit diesen Stoffgemischen sowohl im Do it Yourself-Bereich, im Berufsgartenbau und in der Landwirtschaft eine Möglichkeit zu schaffen, den Einsatz von mineralischen Düngemitteln zu reduzieren und den Nährstoffkreislauf, auch bedingt durch eine nachhaltige und moderne Energiegewinnung, anzuregen.

Daher ist es Aufgabe der vorliegenden Erfindung, einen organischen Carbondünger für landwirtschaftliche gärtnerische Zwecke bereitzustellen, der in der Lage ist, das Pflanzenwachstum zu fördern und den Anteil chemischer Stoffe in der Bodenwirtschaft zu reduzieren.

Diese Aufgabe wird erfindungsgemäß mit den kennzeichnenden Merkmalen des Hauptanspruchs gelöst. Weitere Merkmale sind der Beschreibung und den Unteransprüchen zu entnehmen.

Erfindungsgemäß betrifft die Erfindung ein Verfahren zur Herstellung organischer Carbondünger aus anaerob behandelten Gärprodukten aus Biogasanlagen, die einer Trocknung auf > 85 % Trockenmasse (TM) unterzogen wird und der Trockenmasse Pflanzenkohle zwischen 5% - 50 % beigemischt wird, wobei der Anteil der Gärprodukte auf 95 % bis 50 % reduziert wird, wobei dem organischen Carbondünger ein flüssiges und/oder festes Stickstoffgemisch organischer oder anorganischer Herkunft vor der Trocknung und nach der anaeroben Fermentation zugeführt wird und dass insgesamt durch die zum Einsatz kommenden Stoffe der Stickstoffgehalt auf 3 % bis 20 % im fertigen Produkt angehoben wird.

Dabei werden die Gärprodukte aus der Energiegewinnung aus nachwachsenden Rohstoffen und/oder tierischen Exkrementen, sogenanntem Wirtschaftsdünger und/oder Reststoffen aus der Lebensmittelherstellung, wobei die Getränkeindustrie mit einbezogen sein kann, mit Kohle vermischt. Der Ursprung dieser Gärprodukte kann in einer Mischung aus den drei aufgeführten Einsatzstoffen oder auch nur einem oder zwei Stoffen bestehen.

Die hierfür zu verwendende Kohle kann sowohl durch die pyrolytische Behandlung von pflanzlichen Materialien wie auch durch Verwendung von Braun- oder Steinkohle hergestellt werden. Dieser Inkohlungsprozess ist jedoch nicht zwangsläufig auf die Pyrolyse beschränkt. Wahlweise kann für die Gewinnung der Kohle auch das Verfahren der hydrothermalen Carbonisierung (HTC) eingesetzt werden. Insbesondere sind für diesen Herstellungsprozess zur Gewinnung pflanzlicher Kohle nicht verkaufte Blumenpflanzen (Pflanzenabschriften), wie beispielsweise typische Frühjahrsblüher die nicht verkauft werden konnten (schlechte Witterungsverhältnisse) und erfahrungsgemäß in großer Menge zur Verfügung stehen, besonders gut für die Verkohlung geeignet. Die für die Einmischung benötigte Pflanzenkohle bildet somit einen Kreislauf, der das bisherige Kompostieren der Pflanzenabschriften und der damit verbundenen CO2 Freisetzung verhindert. Es entsteht eine CO2-Senke (C- Sequestrierung). Die übrig gebliebenen Blumenreste werden gesammelt und der Pyrolyseanlage kontinuierlich in großen Mengen zugeführt und zu Pflanzenkohle verarbeitet.

Die Mischung des Düngers wird im Batchverfahren in einem Trommelmischer oder wahlweise in einem Zwangsmischer oder anderen geeigneten Mischapparaturen hergestellt. Eine Vermischung im kontinuierlichen Verfahren ist ebenfalls möglich. Hier werden dem Ausgangsprodukt kontinuierlich die erforderlichen Mengen zugesetzt und im Durchlaufverfahren auf Transportbändern und/oder im Verlauf eines Kegelmischverfahrens gemischt.

Eine vorteilhafte Variante des Verfahrens zeichnet sich dadurch aus, dass dem organischen Carbondünger ein Tonmineral, vorzugsweise Bentonit, zwischen 5 % bis 60 % des Tonminerals zur Förderung eines Ton-/Humuskomplexes zugegeben wird, wobei vorteilhafte Abstufungen fallspezifisch signifikante Ergebnisse liefern. Dem Trägermaterial (Gärprodukte) werden zwischen 5% und 20% Tonmehl zugefügt und vermischt. Der Anteil an Trägermaterial und daraus resultierend auch der Gehalt an Nährstoffen wird entsprechend auf 95% bis 80% reduziert. Darüber hinaus sind Vermischungen von 1.) 21% bis 40% und 2.) 41% bis 60%, sowie 3.) 61% bis 80% für den gartenbaulichen Zweck sinnvoll. Unter dieser Annahme reduziert sich der Gehalt an Trägermaterial und Nährstoffen wie folgt: 1.) 79% bis 60% und 2.) 59% bis 40%, sowie 39% bis 20%. Dieses Ton/Humusgemisch ist für den Einsatz als Bodenhilfsstoff, insbesondere in der saisonalen Anwendung geeignet. Diese zugesetzten Mineralien forcieren die Bildung von Ton/Humuskomplexen. Diese Komplexe verleihen dem Boden eine krümelige Struktur die besonders im Winter für den Gartenboden gut geeignet ist, einem Verklumpen des Bodens in der regenreichen Jahreszeit vorzubeugen und entgegenzuwirken.

Dabei bestehen die kohlehaltigen Gärprodukte, genau wie im oberen Ausführungsbeispiel, aus nachwachsenden Rohstoffen und/oder tierischen Exkrementen sogenannter Wirtschaftsdünger und/oder Reststoffen aus der Lebensmittelherstellung, wobei die Getränkeindustrie mit einbezogen ist. Diese Mischung wird gemischt mit feinen Tonmineralien. Der Ursprung dieser Gärprodukte kann in einer Mischung aus den drei aufgeführten Komponenten oder auch nur einem oder zwei Stoffen bestehen. Charakteristisch ist jedoch die Tatsache, dass alle vorstehend benannten Stoffe einer anaeroben Behandlung unterzogen worden sind. Nach dieser Behandlung werden die entstandenen Gärprodukte einer Separation und/oder Trocknung auf > 85 % TM unterzogen. Durch diese Trocknung wird das Produkt lagerstabil gemacht.

Ferner ist es vorteilhaft, dass dem organischen Carbondünger ein flüssiges und/oder festes Stickstoffgemisch organischer oder anorganischer Herkunft vor, oder nach der Trocknung und nach der anaeroben Fermentation zugeführt wird, so dass eine Mischung aus Gärprodukten und organischen und anorganischen Stickstoffverbindungen, also ein organischer Stickstoffdünger, entsteht.

Somit wird nach der anaeroben Fermentation und vor oder nach der Trocknung ein flüssiges und/oder festes Stickstoffgemisch organischen oder anorganischer Herkunft zugeführt. Erforderlichenfalls kann diese Stickstoffverbindung auch nach dem Trocken zugesetzt werden. Die Mischungen aus den eingesetzten Stickstoffverbindungen anorganischen Ursprungs, zusammen mit weiter oben beschriebenen Mischungen mit nachfolgenden Substanzen wie
a. Ammoniumsulfat
b. Ammoniumsulfatsalpeter
c. Ammoniumnitrat^
d. Calciumsnitrat
e. Kaliumnitrat
f. Kalkammonsalpeter
g. Kalkstickstoff.
sind vorteilhafte Mischungen für einen bodenverbessernden Dünger.

Neben diesen anorganischen Verbindungen werden auch organische Verbindungen für eine Vermischung mit organischem Dünger gemäß oben beschriebenen Mischungen verwendet. Die benutzten organischen Verbindungen sind:
a. Harnstoff
b. Hornmehl
c. Schafwolle
d. Pflanzliche Stickstoffträger

Vorteilhaft ist es bei dem Verfahren auch, dass zwischen der Fermentation und dem Trocknen oder nach dem Trocknen, der anaerob behandelten Biomasse Huminstoffe zugesetzt werden können, wobei die Humate oder Huminsäuren in einer Konzentration zwischen 0,2% bis 40 % vorliegen sollen, wobei die Humate in einer Konzentration von 0,2% bis 5%, oder 6% bis 10%, oder 11% bis 20%, oder 21% bis 40% den getrockneten oder den Gärprodukten vor oder nach der Trocknung zugesetzt werden und die anderen unlöslichen Huminstoffe den getrockneten Gärprodukten in einem Gewichtsverhältnis von 1% bis 30%, oder 31% bis 40%, oder 41% bis 60% beigemischt werden, wodurch ein organischer Humusdünger entsteht, der ein Gemisch aus Gärprodukten und Huminstoffen darstellt.

Hierbei werden einem organischen Grunddünger nach der Fermentation und vor oder nach dem Trocknen Huminstoffe zugesetzt, die die Endprodukte eines Humifikationsprozesses aus pflanzlichen und tierischen Materialien und der mikrobiologischen Zersetzung sind.

Die Hauptfraktion dieser Huminstoffe sind die Humin- und die Fulvosäuren. Diese Stoffe werden in einer hohen Konzentration in der Weichbraunkohle gefunden.

Diese Huminstoffe haben wesentliche bodenverbessernde Wirkungen. Insgesamt wirken sich die Huminstoffe auf chemischem, ökologischem, physikalischem und biologischem Weg positiv auf die Bodenbeschaffenheit und organische Kenngrößen des Bodens aus.

Insbesondere sei hier darauf hingewiesen, dass die Huminstoffe eine positive Eigenschaft hinsichtlich der Möglichkeit der Immobilisierung und Bindung von Schwermetallen aufweisen. Neben allen anderen positiven Eigenschaften ist eben diese Eigenschaft für den Einsatz in der Bearbeitung von mit Schwermetallen belasteten Böden besonders gut geeignet. Die oben beschriebenen positiven Eigenschaften, die den getrockneten Gärprodukten durch den Zusatz von Huminstoffen verliehen werden, sollen insbesondere in schwermetallbelasteten Bodengebieten im Gartenbau eingesetzt werden. Jedoch ist infolge einer allgemeinen Bodenverbesserung durch den Zusatz von Humus, hier in Form von Huminstoffen, eine deutliche Verbesserung des Bodens und somit eine erhebliche Verbesserung des Pflanzenwachstums festzustellen.

Um die oben beschriebene Wirkung zu erzielen, werden die Huminstoffe nach der Fermentation und vor oder nach dem Trocknungsprozess zugesetzt. Zum Einsatz kommen hier alle Fraktionen der Huminstoffe, die Huminsäuren und deren Natrium- (Natriumhumat) und Kalisalze (Kaliumhumat).

Ein weiterer Vorteil ist darin zu sehen, dass zwischen der Fermentation und dem Trocknen der anaerob behandelten Biomasse eine definierte, wässrige Lösung aus Eisen II Sulfat zugeführt wird, wobei der Einsatz von Eisensalzen in den getrockneten Gärprodukten in einer Konzentration von 1 % bis 20 % erfolgt, wobei der Einsatz von Eisensalzen in den getrockneten Gärprodukten in Abstufungen der Konzentration von 1 % bis 5%, oder 6% bis 10%, oder 11% bis 20% erfolgt, wodurch ein organischer Rasendünger mit Mooshemmung entsteht. Dabei ist es hinlänglich bekannt, dass Eisen II Sulfat eine gewollte schädigende Wirkung auf Moose ausübt. Darüber hinaus werden durch diesen Einsatz von einem Eisensalz den Gräsern das für das gesunde Wachstum erforderliche Eisen zur Verfügung gestellt.

Im Stand der Technik ist hier die Ausbringung der reinen Substanz und ein mineralisches Gemisch mit dieser Substanz bekannt. Jedoch ist dieses nicht ohne Risiko, da die Substanz in Verbindung mit Feuchtigkeit eine ätzende und gesundheitsschädliche Wirkung entfaltet. Häufig wird fälschlicherweise die Bezeichnung "Eisendünger" verwendet. Hier ist klar zu erkennen, dass es sich nicht um einen Dünger, sondern um ein Pflanzenschutzmittel handelt, welches unter Verschluss im Verkaufsbereich gehalten werden muss.

Die Erfindung bezieht sich auch darauf, durch Einmischung von Eisen II Sulfat in die flüssigen Gärprodukte vor dem Trocknen der Gärprodukte, den Wirkstoff in diese im getrockneten Zustand gekörnten Gärreste einzuschließen. Nach der Trocknung liegt dann ein homogenes und definiertes Gemisch aus kohlehaltigen Gärprodukten und Eisensalzen als moosvernichtenden Wirkstoff vor. Infolge des Einschlusses des Eisen II sulfates in den getrockneten Gärprodukten ist ein Umgang hiermit wesentlich ungefährlicher und unbedenklicher als ein Umgang mit der reinen Substanz. Gleichzeitig wird durch den Gehalt an Nährstoffen dem Rasen hiermit ein echter Dünger mit Mooshemmer zugeführt.

Vorteilhaft ist es ferner, dass nach der Fermentation und vor oder nach dem Trocknen der anaerob behandelten Biomasse ein naturidentischer Duftstoff in einer Konzentration zwischen 0,1 % bis 5 % zugeführt wird, wobei es sich bei dem zugemischten Duftstoff um 2-Undecanon handelt und in vorteilhaften Abstufungen von 0,1 - 1%,1 - 2 %; 2 - 3 %; 3 - 4 % und 4 - 5 % zugeführt werden kann, wodurch ein Vergrämungsdünger gegen oberirdische und unterirdische Kleintiere entsteht.

Diese Mischung erfolgt nach dem Trocknen im Batchbetrieb in einemTrommelmischer oder einem anderen geeigneten Mischer, oder durch Aufsprühen. Der Schutzanspruch bezieht sich auf alle Möglichkeiten des Mischens und auf das Gemisch selbst. Bei diesem zugemischten Stoff handelt es sich um 2-Undecanon, was ein farbloses, duftendes Öl ist, dessen chemische und physikalische Daten der Reinsubstanz wie folgt lauten:
Molekülmasse: 170,30 g/mol
Summenformel: C₁₁H₂₂O
Dichte: 0,8250 (20 °C)
Brechungsindex: 1,430 (20 °C)
Schmelzpunkt: 15 °C
Siedepunkt: 232 °C (unterschiedliche Angaben, auch: 225 und 228 °C)
Löslichkeit: Ethanol, Ether, Aceton, Benzol, Chloroform. Unlöslich in Wasser.

Der ausgeprägte Geruchssinn macht eine Wahrnehmung dieses Duftstoffes für Kleintiere wie z.B. Katzen, Hunde und Marder, aber auch Wildtiere bis in geringste Konzentrationen möglich. Dieser Geruch wirkt auf die Kleintiere stark abschreckend. In gewissen Konzentrationen ist auch eine Wirkung gegen Wildtiere beobachtet worden.

Abweichend von der bisherigen Anwendung, diesen Duftstoff in flüssiger Form aufzubringen, bezieht sich die Erfindung darauf, in Blumenrabatten, Pflanzkübeln und anderen Freilandanpflanzungen neben einer düngenden, gleichzeitig eine vergrämende Wirkung herbeizuführen. Es muss nicht das Mittel in konzentrierter Form, wie bisher eingesetzt werden, sondern wird langanhaltend wirksam als Langzeitdünger mit vergrämender Wirkung angewendet.

Ein weiterer Vorteil besteht darin, dass für die Herstellung von Gartenerden vorzugsweise pflanzlichen Ursprungs, Stoffe aus der Kompostierung von organischen Materialien, Torf oder auch anderen Grundsubstraten getrocknete Gärprodukte zugemischt werden, wobei die Mischungsverhältnisse zwischen 1 % bis 30 % liegen und in vorteilhaften Abstufungen von 1 bis 10 %; 11-20 %; 21-30 % Zusatz der Produkte als besonders geeignet erscheinen, wodurch gärtnerische Erden und andere Substrate entstehen.

Vorteilhaft ist es auch, dass die zu verwendende Kohle durch Wärmebehandlung von pflanzlichen Materialien erzeugt wird, wobei als pflanzliche Materialien unverkaufte Pflanzen, zum Beispiel Frühblüher, verwendet werden.

In manchen Anwendungsfällen kann es von Vorteil sein, dass der Trockenmasse Calciumcarbonat zwischen 5% bis 50 % beigemischt wird, wobei der Anteil der Gärprodukte je nach Anteil des Calciumcarbonats auf 95 % bis 50 % reduziert wird.

Allgemein ist es für den oben beschriebenen Dünger, wie der Name bereits sagt, vorteilhaft, dass vor oder nach der Trocknung zwischen 1% und 70% Pflanzenkohle zugesetzt werden, wobei der Anteil an Gärprodukten auf 99% bis 30% reduziert wird.

Insgesamt soll durch die zum Einsatz kommenden Stoffe der Stickstoffgehalt auf 3% bis 20% in vorteilhaften Abstufungen von 3-8 %; 9-15 %; 16-20 % in dem fertigen Produkt angehoben werden. Die Pflanzen benötigen Stickstoff für eine ausgeprägte Blattbildung. Stickstoff wird auch oft als der Motor des Wachstums beschrieben. Ein gesundes Pflanzenwachstum ist nur durch einen ausgewogenen Gehalt an Stickstoff möglich.

Wie bereits w.o. erwähnt, entstammen die Gärprodukte der Fermentation von Pflanzenbestandteilen und/oder Wirtschaftsdünger aus der Tierhaltung. Diese Fraktionen enthalten einen hohen Anteil an Nährstoffen die auch nach dem Fermentationsprozess vollständig erhalten bleiben. Die hierin enthaltenen Nährstoffe dienen dazu, nährstoffarme Materialien, wie vorstehend benannt, insbesondere Torf, durch das Vermischen mit den Gärprodukten aufzudüngen, um diese für den Einsatz als gärtnerische Erde oder für andere Kultursubstrate nutzbar zu machen. Der hierdurch bedingte Vorteil liegt darin, dass die Vorräte an mineralischen Nährstoffen und die Umwelt geschont werden, da eine Auswaschung der Nährstoffe und damit eine Eutrophierung vermieden werden kann.

Die Nährstoffe aus dem so erhaltenen Substrat, die nur sehr langsam freigesetzt werden, stehen den Pflanzen in voller Menge zur Verfügung. Eine Eutrophierung wird ausgeschlossen, da diese Nährstoffe nur langsam freigesetzt werden, die eine Pflanze im Verlauf der Vegetationsperiode aufnimmt, stehen vollständig zur Verfügung, um Sie im Gemisch mit anderen Stoffen wie z.B. Torf wieder an die Kulturpflanzen abzugeben.

Auch der Einsatz von Pflanzenkohle, die aus pflanzlichen Rohstoffen unter dem Einsatz sowohl des Pyrolyseverfahren wie auch der hydrothermalen Carbonisierung gewonnen wird, stellt ein weiteres vorteilhaftes Ausführungsverfahren für die erfindungsgemäße Herstellung eines Gemisches dar, wobei unter der Verwendung von Gärprodukten aus Biogasanlagen die pflanzlichen Stoffe als Wirtschaftsdünger und/oder Stoffe aus der Nahrungsmittelindustrie und auch andere organische Reststoffe einer Fermentation, unterzogen worden sind.

Diesen Stoffen wird vor oder auch nach der Trocknung eine bestimmte Menge an Pflanzenkohle beigemischt, wobei die verwendete Pflanzenkohle aus der Carbonisierung von pflanzlichen Materialien hergestellt worden ist. Dieser Inkohlungsprozess ist jedoch nicht zwangsläufig auf die Pyrolyse beschränkt. Wahlweise soll für die Gewinnung der Kohle auch das Verfahren der hydrothermalen Carbonisierung (HTC) von pflanzlichen Stoffen und/oder Braun- oder Steinkohle und andere Inkohlungspodukte aus der Kette der Kohleentstehung, eingesetzt werden.

Aufgrund der sehr hohen Kationenaustauscherkapazität und der Aufnahmekapazität an Wasser, ist dieser Dünger mit einem großen Gehalt an Kohle dazu in der Lage die bereits beschriebenen grundlegenden Eigenschaften des dieser Erfindung zugrundeliegenden Carbondüngers noch wesentlich zu forcieren. Bedingt durch die Beimengung von Pflanzenkohle entsteht ein Düngemittel mit besonders positiven Eigenschaften.

Diesem Dünger, mit den durch die Vermischung von Gärprodukten und Pflanzenkohle entstandenen, für den Gartenbau besonders positiven Eigenschaften, können andere Stoffe wie mineralische oder organische Stoffe zur Erhöhung und Verbesserung der bodenverbessernden und düngenden Eigenschaften, vorteilhaft beigemischt werden.

Der Einsatz von Pflanzenkohle, der in den nachstehend aufgeführten Konzentrationen einen sinnvollen Einsatz im Gartenbau beträgt, beläuft sich auf 1% bis 5% wobei sich der Anteil an Trägermaterial von 99% auf 95% reduziert.

Gleichermaßen ist der Einsatz von 1.) 6% bis 15%, 2.) 16% bis 30%, sowie 3.) 31% bis 45% und 4.) 46% bis 70% sinnvoll und gartenbaulich indiziert.

Entsprechend diesen Anwendungsbeispielen reduziert sich der Gehalt an Trägermaterial 1.) von 94% auf 85%, 2.) von 84% auf 70%, 3.) von 69% auf 55%, sowie von 4.) 54% auf 30%.

Insgesamt zielt das erfindungsgemäße Produkt und dessen Vermischungen darauf ab, als ein Dünger mit verzögerter Düngewirkung neben anderen spezifizierten Wirkungen eingesetzt zu werden, um die Bodenverhältnisse zu verbessern, den Gehalt an Nährstoffen und an Humus zu erhöhen, sowie in einem anderen Anwendungsfall Kleintiere zu vergrämen.

## Patentansprüche

1. Verfahren zur Herstellung organischer Carbondünger aus anaerob behandelten Gärprodukten aus Biogasanlagen, die einer Trocknung auf > 85% Trockenmasse (TM) unterzogen wird und der Trockenmasse Pflanzenkohle zwischen 5% - 50% beigemischt wird, wobei der Anteil der Gärprodukte auf 95% bis 50% reduziert wird, wobei dem organischen Carbondünger ein flüssiges und/oder festes Stickstoffgemisch organischer oder anorganischer Herkunft vor der Trocknung und nach der anaeroben Fermentation zugeführt wird und
dass insgesamt durch die zum Einsatz kommenden Stoffe der Stickstoffgehalt auf 3% bis 20% im fertigen Produkt angehoben wird.

2. Verfahren nach Anspruch 1, **dadurch gekennzeichnet, dass** den Gärresten der Gärprodukte noch im flüssigen Zustand vor der Trocknung eine Kohle zugesetzt wird, die sowohl konventionell, pyrolytisch aus Braun- oder Steinkohle gewonnen werden kann, oder auch durch die Carbonisierung von pflanzlichen Materialien hergestellt wurde.

3. Verfahren nach mindestens einem der vorangegangenen Ansprüche, **dadurch gekennzeichnet, dass** die Mischungen aus den eingesetzten Stickstoffverbindungen anorganischen Ursprungs und den nach den Ansprüchen 1 und 2 hergestellten Mischungen vorzugsweise nachfolgende Substanzen sind:
a. Ammoniumsulfat
b. Ammoniumsulfatsalpeter
c. Ammoniumnitrat
d. Calciumnitrat
e. Kaliumnitrat
f. Kalkammonsalpeter
g. Kalkstickstoff.

4. Verfahren nach mindestens einem der vorangegangenen Ansprüche, **dadurch gekennzeichnet, dass** neben den anorganischen Verbindungen auch organische Verbindungen für eine Mischung mit organischem Dünger verwendet wird, wobei die verwendeten organischen Verbindungen
a. Harnstoff
b. Hornmehl
c. Schafwolle
d. pflanzliche Stickstoffträger
sind.

5. Verfahren nach mindestens einem der vorangegangenen Ansprüche, **dadurch gekennzeichnet, dass** zwischen der Fermentation und dem Trocknen oder nach dem Trocknen, der anaerob behandelten Biomasse Huminstoffe zugesetzt werden, wobei die Humate oder Huminsäuren in einer Konzentration zwischen 0,2% bis 40 % vorliegen sollen.

6. Verfahren nach mindestens einem der vorangegangenen Ansprüche, **dadurch gekennzeichnet, dass** zwischen der Fermentation und dem Trocknen der anaerob behandelten Biomasse eine definierte, wässrige Lösung aus Eisen II Sulfat zugeführt wird, wobei der Einsatz von Eisensalzen in den getrockneten Gärprodukten in einer Konzentration von 1 % bis 20 % erfolgt.

7. Verfahren nach mindestens einem der vorangegangenen Ansprüche, **dadurch gekennzeichnet, dass** nach der Fermentation und vor oder nach dem Trocknen der anaerob behandelten Biomasse ein naturidentischer Duftstoff in einer Konzentration zwischen 0,1 % bis 5 % zugeführt wird, wobei es sich bei dem zugemischten Duftstoff um 2-Undecanon handelt.

8. Verfahren nach mindestens einem der vorangegangenen Ansprüche, **dadurch gekennzeichnet, dass** für die Herstellung von Gartenerden vorzugsweise pflanzlichen Ursprungs, Stoffe aus der Kompostierung von organischen Materialien, Torf oder auch anderen Grundsubstraten getrocknete Gärprodukte zugemischt werden, wobei die Mischungsverhältnisse zwischen 1 % bis 30 % der Produkte betragen.

9. Verfahren nach mindestens einem der vorangegangenen Ansprüche, **dadurch gekennzeichnet, dass** die zu verwendende Kohle durch Wärmebehandlung von pflanzlichen Materialien erzeugt wird, wobei als pflanzliche Materialien unverkaufte Pflanzen, zum Beispiel Frühblüher, verwendet werden.

10. Verfahren nach mindestens einem der vorangegangenen Ansprüche, **dadurch gekennzeichnet, dass** der Trockenmasse Calciumcarbonat zwischen 5% bis 50 % beigemischt wird, wobei der Anteil der Gärprodukte je nach Anteil des Calciumcarbonats auf 95 % bis 50 % reduziert wird.

11. Verfahren nach mindestens einem der vorangegangenen Ansprüche, **dadurch gekennzeichnet, dass** vor oder nach der Trocknung zwischen 1% und 70% Pflanzenkohle zugesetzt werden, wobei der Anteil an Gärprodukten auf 99% bis 30% reduziert wird.

12. Verfahren nach einem der vorangegangenen Ansprüche, **dadurch gekennzeichnet, dass** dem organischen Carbondünger ein Tonmineral, vorzugsweise Bentonit, zwischen 5% bis 60% des Tonminerals zur Förderung eines Ton-/Humuskomplexes zugegeben wird.

## Claims

1. Method for the production of organic carbon fertilizer from anaerobically treated fermentation products from biogas plants, which are subjected to drying to > 85% dry matter (DM) and the dry matter is mixed with biochar between 5% and 50%, whereby the proportion of digestate being reduced to 95% to 50% a liquid and/or solid nitrogen mixture of organic or inorganic origin is added to the organic carbon fertilizer before drying and after the anaerobic fermentation and that the total nitrogen content in the finished product is increased to between 3% to 20% by the substances used.

2. Method according to Claim 1, **characterized in that** coal is added to the fermentation residues of the fermentation products while they are still in the liquid state before drying, which coal can be obtained either conventionally, pyrolytically from lignite or hard coal, or has also been produced by the carbonization of plant materials.

3. Method according to at least one of the preceding claims, **characterized in that** the mixtures of the nitrogen compounds of inorganic origin used and the mixtures produced according to claims 1 and 2 are preferably the following substances:
a. ammonium sulfate
b. ammonium sulfate nitrate
c. ammonium nitrate
d. calcium nitrate
e. potassium nitrate
f. calcium ammonium nitrate
g. calcium cyanamide

4. Method according to at least one of the preceding claims, **characterized in that,** in addition to the inorganic compounds, organic compounds are also used for a mixture with organic fertilizer, whereby the organic compounds used are
a. urea
b. horn meal
c. sheep wool
d. plant nitrogen carriers

5. Method according to at least one of the preceding claims, **characterized in that** humic substances are added to the anaerobically treated biomass between fermentation and drying or after drying, the humates or humic acids being present in a concentration of between 0.2% and 40%.

6. Method according to at least one of the preceding claims, **characterized in that** between the fermentation and the drying of the anaerobically treated biomass, a defined, aqueous solution of iron II sulfate is added, whereby the use of iron salts in the dried fermentation products is in a concentration of 1% to 20%.

7. Method according to at least one of the preceding claims, **characterized in that** after the fermentation and before or after the drying of the anaerobically treated biomass, a nature-identical fragrance is added in a concentration of between 0.1% and 5%, whereby the admixed fragrance is 2-undecanone.

8. Method according to at least one of the preceding claims, **characterized in that** for the production of garden soil, preferably of plant origin, substances from the composting of organic materials, peat or other base substrates, dried fermentation products are mixed in, the mixing ratios being between 1% and 30% of the products.

9. Method according to at least one of the preceding claims, **characterized in that** the coal to be used is produced by heat treatment of vegetable materials, unsold plants are used as vegetable materials, for example fodder.

10. Method according to at least one of the preceding claims, **characterized in that** between 5% and 50% of calcium carbonate is added to the dry mass, whereby the proportion of fermentation products is reduced to 95% to 50% depending on the proportion of calcium carbonate.

11. Method according to at least one of the preceding claims, **characterized in that** between 1% and 70% biochar is added before or after drying, whereby the proportion of fermentation products is reduced to 99% to 30%.

12. Method according to one of the preceding claims, **characterized in that** a clay mineral, preferably bentonite, is added to the organic carbon fertilizer between 5% and 60% of the clay mineral to promote a clay/humus complex.

## Revendications

1. Procédé de production d'engrais carbonés organiques à partir de produits de la digestion anaérobie provenant de méthaniseurs, produits qui sont soumis à séchage pour obtenir > 85 % de matière sèche (MS) et à la matière sèche desquels du charbon végétal est ajouté dans une proportion allant de 5 % à 50 %, réduisant ainsi la part des digestats à une proportion pouvant aller de 95 % à 50 %, un mélange azoté liquide et/ou solide d'origine organique ou inorganique étant ajouté à l'engrais carboné organique avant le séchage et après la digestion anaérobie, et en ce que, au total, du fait des substances mises en œuvre, la teneur en azote dans le produit fini est augmentée de 3 % à 20 %.

2. Procédé selon la revendication 1, **caractérisé en ce qu'**un charbon pouvant être obtenu aussi bien de manière conventionnelle, par pyrolyse à partir de lignite ou de houille, ou produit par carbonisation de matières végétales, est ajouté aux résidus des digestats encore à l'état liquide avant le séchage.

3. Procédé selon au moins l'une des revendications précédentes, **caractérisé en ce que** les mélanges des composés azotés mis en œuvre sont d'origine inorganique et les mélanges produits selon les revendications 1 et 2 sont principalement les substances suivantes :
a. sulfate d'ammonium
b. nitrosulfate d'ammonium
c. nitrate d'ammonium
d. nitrate de calcium
e. nitrate de potassium
f. nitrate d'ammoniaque calcaire
g. cyanamide calcique.

4. Procédé selon au moins l'une des revendications précédentes, **caractérisé en ce que**, outre les composés inorganiques, des composés organiques sont également utilisés pour obtenir un mélange avec un engrais organique, les composés organiques utilisés étant
a. de l'urée
b. de la farine de corne torréfiée
c. de la laine de mouton
d. des supports d'azote végétaux.

5. Procédé selon au moins l'une des revendications précédentes, **caractérisé en ce que**, entre la fermentation et le séchage, ou après le séchage, des substances humiques sont ajoutées à la biomasse anaérobie, les humates ou les acides humiques devant être présents dans une concentration comprise entre 0,2 % et 40 %.

6. Procédé selon au moins l'une des revendications précédentes, **caractérisé en ce que,** entre la fermentation et le séchage de la biomasse anaérobie, est ajoutée une solution aqueuse définie de sulfate de fer II, les sels de fer mis en œuvre dans le digestat séché représentant une concentration de 1 % à 20 %.

7. Procédé selon au moins l'une des revendications précédentes, **caractérisé en ce que,** après la fermentation et avant ou après le séchage de la biomasse anaérobie, une substance odorante naturelle identique est ajoutée à une concentration comprise entre 0,1 % et 5 %, la substance odorante ajoutée étant la 2-Undécanone.

8. Procédé selon au moins l'une des revendications précédentes, **caractérisé en ce que** pour la fabrication de terreaux horticoles, de préférence d'origine végétale, on ajoute des digestats séchés aux substances issues du compostage de matières organiques, à de la tourbe ou encore à d'autres substrats de base, les proportions de mélange étant comprises entre 1 % et 30 % des produits.

9. Procédé selon au moins l'une des revendications précédentes, **caractérisé en ce que** le charbon à utiliser est produit par traitement thermique de matières végétales, les matières végétales utilisées étant des végétaux invendus, par exemple du fourrage.

10. Procédé selon au moins l'une des revendications précédentes, **caractérisé en ce qu'**entre 5 % et 50 % de carbonate de calcium sont ajoutés à la matière sèche, réduisant ainsi les digestats à une proportion de 95 % à 50 %, selon la part de carbonate de calcium.

11. Procédé selon au moins l'une des revendications précédentes, **caractérisé en ce qu'**avant ou après le séchage, entre 1 % et 70 % de charbon végétal sont ajoutés, réduisant ainsi les digestats à une proportion allant de 99 % à 30 %.

12. Procédé selon l'une des revendications précédentes, **caractérisé en ce qu'**un minéral argileux, principalement de la bentonite, est ajouté à l'engrais carboné organique à une proportion comprise entre 5 % et 60 % du minéral argileux pour favoriser un complexe argilo-humique.
